# EUROPÄISCHE PATENTSCHRIFT

(11) **EP 1 164 041 B1**
(45) Veröffentlichungstag und Bekanntmachung des Hinweises auf die Patenterteilung: **10.05.2006**
(21) Anmeldenummer: 01114216.3
(22) Anmeldetag: 12.06.2001
(51) Int. Cl.: B60J 7/12, B60J 1/18

(54) **Cabriolet-Fahrzeug**
Convertible vehicle
Véhicule convertible

(30) Priorität: 15.06.2000 DE 10029473
(43) Veröffentlichungstag der Anmeldung: 19.12.2001
(73) Patentinhaber: Wilhelm Karmann GmbH, 49084 Osnabrück (DE)
(72) Erfinder: Rothe, Karl, 49597 Rieste (DE); Russke, Klaus, 49143 Bissendorf (DE); Heselhaus, Udo, 49479 Ibbenbüren (DE); Schnieder, Werner, 49124 Georgsmarienhütte (DE)
(74) Vertreter: Busse & Busse Patentanwälte

(56) Entgegenhaltungen:
- EP-A- 0 332 810
- US-A- 5 267 770
- US-A- 5 788 316

## Beschreibung

Die Erfindung betrifft ein Cabriolet-Fahrzeug mit einem einen heckseitigen Verdeckspannbügel aufweisenden Faltverdeck gemäß dem Oberbegriff des Anspruchs 1.

Bei einem bekannten Cabriolet-Fahrzeug dieser Art (DE 41 28 115 C1) weist das Faltverdeck einen die Heckscheibe einfassenden Verdeckbezug auf, der im Bereich oberhalb des Verdeckspannbügels mit einem breiten Gewebestreifen zur Heckscheibe hin verläuft, so daß diese durch geringe Abmessungen ein eingeschränktes Sichtfeld bietet und die Sicherheit für den Fahrzeugbenutzer nachteilig beeinflußt ist. Bei einem Faltverdeck gemäß DE 43 09 607 A1 ist die verstellbare Heckscheibe mit ihrem unteren Randbereich von innen gegen den Verdeckspannbügel abgestützt, so daß in einem schmalen Anlagebereich eine außenliegende und zu Verschmutzungen neigende Dichtfuge gebildet ist, die nachteilig hohe Anpreßkräfte und eine aufwendige Steuerung der Bauteile erfordert. Ein Cabriolet-Fahrzeug nach dem Oberbegriff von Anspruch 1 ist ebenso aus dem Dokument US-5,788,316 bekannt geworden. Die Erfindung befaßt sich mit dem Problem, für ein Cabriolet-Fahrzeug eine Heckscheibe zu schaffen, die mit geringem technischen Aufwand so in die Dachhaut integriert ist, daß im Bereich des Verdeckspannbügels bei zuverlässiger Dichtigkeit eine vergrößerte Scheibenfläche eine verbesserte heckseitige Durchsicht ermöglicht.

Die Erfindung löst diese Aufgabe mit einer Heckscheibe für ein Cabriolet-Fahrzeug mit den kennzeichnenden Merkmalen des Anspruchs 1. Hinsichtlich wesentlicher weiterer Ausgestaltungen des erfindungsgemäßen Cabriolet-Fahrzeugs wird auf die Ansprüche 2 bis 14 verwiesen.

Bei dem erfindungsgemäßen Cabriolet-Fahrzeug weist die Heckscheibe eine Scheibenfläche auf, deren unterer Querseitenrand bis zum Verdeckspannbügel soweit heruntergezogen ist, daß dieser Bügel bei geschlossenem Faltverdeck nach Art eines Stütz- und Verschlußteils wirksam wird. Die Heckscheibe ist in ihrem oberen Bereich in die Dachhaut durch eine dreiseitige Einfassung nach Art eines U-förmigen Rahmens integriert, und dieser ist zwischen dem unteren Querseitenrand der Heckscheibe und dem Verdeckspannbügel nicht mehr vorgesehen. Die Heckscheibe liegt mit ihrem unteren Querseitenrand über ein Dichtungssystem unmittelbar auf dem Verdeckspannbügel in einer Schließstellung so auf, daß durch die damit erreichte Überdeckung eine zuverlässige Dichtigkeit auch bei geringen Anpreßkräften gewährleistet ist.

Mit dieser Einbindung der Heckscheibe in die Dachhaut ist eine vorteilhafte Vergrößerung des in der Dachhaut für die Heckscheibe vorgesehenen Ausschnitts erreicht und die Durchsicht im Heckbereich des Fahrzeuges insgesamt so verbessert, daß die Sicherheitsanforderungen auch bei unterschiedlichen Dachkonturen und aerodynamisch veränderten Faltverdecks verschiedener Fahrzeugtypen erfüllt sind.

Hinsichtlich wesentlicher weiterer Einzelheiten und vorteilhafter Ausgestaltungen der Erfindung wird auf die nachfolgende Beschreibung und die Zeichnung verwiesen, in der mehrere Ausführungsbeispiele von Cabriolet-Fahrzeugen mit der erfindungsgemäßen Heckscheibe näher erläutert sind. In der Zeichnung zeigen:
- Fig. 1: eine perspektivische Heckansicht eines Cabriolet-Fahrzeuges mit einem eine Heckscheibe aufweisenden Faltverdeck in Schließstellung,
- Fig. 2: eine vergrößerte Seitenansicht des Verdeckgestells mit einer seitlichen Steuerungsbaugruppe in einer ersten Ausführung in der Schließstellung gemäß Fig. 1,
- Fig. 3: eine perspektivische Einzeldarstellung des Verdeckgestells ähnlich Fig. 2 mit der Heckscheibe und dem Verdeckspannbügel in einer Öffnungsphase,
- Fig. 4: eine vergrößerte Einzeldarstellung der aus Heckscheibe und Verdeckspannbügel gebildeten Bau- gruppe mit einer zweiten Ausführung der Steuerungsbaugruppe,
- Fig. 5: eine vergrößerte Ausschnittsdarstellung des Heckbereichs des Cabriolet-Fahrzeuges mit der Heckscheibenabstützung am Verdeckspannbügel in einer mehrteiligen Ausführung, und
- Fig. 6: eine vergrößerte Perspektivdarstellung der Heckscheibenanbindung mit dem mehrteiligen Verdeckspannbügel gemäß Fig. 5.

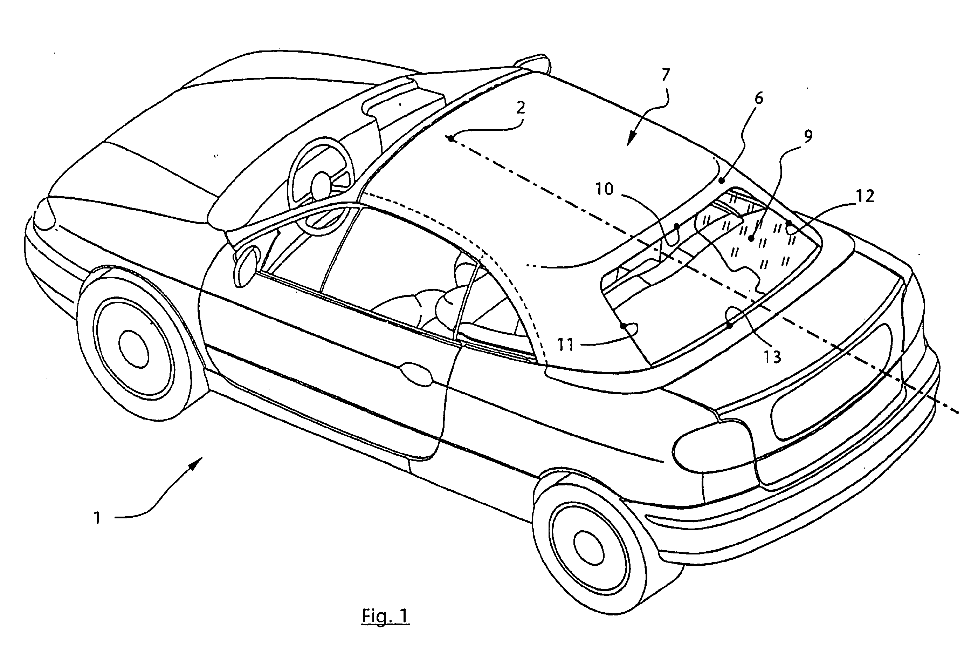

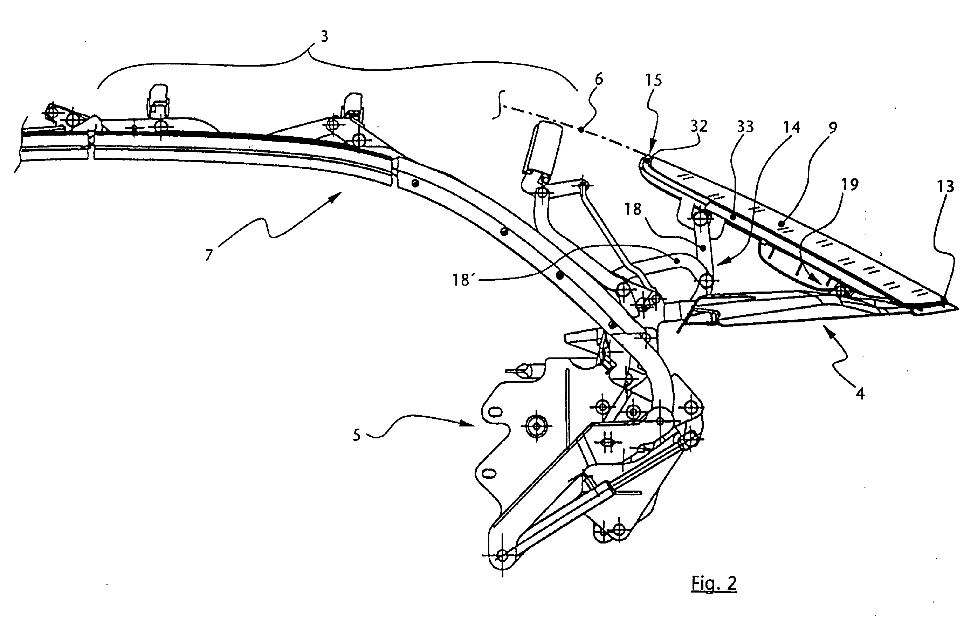

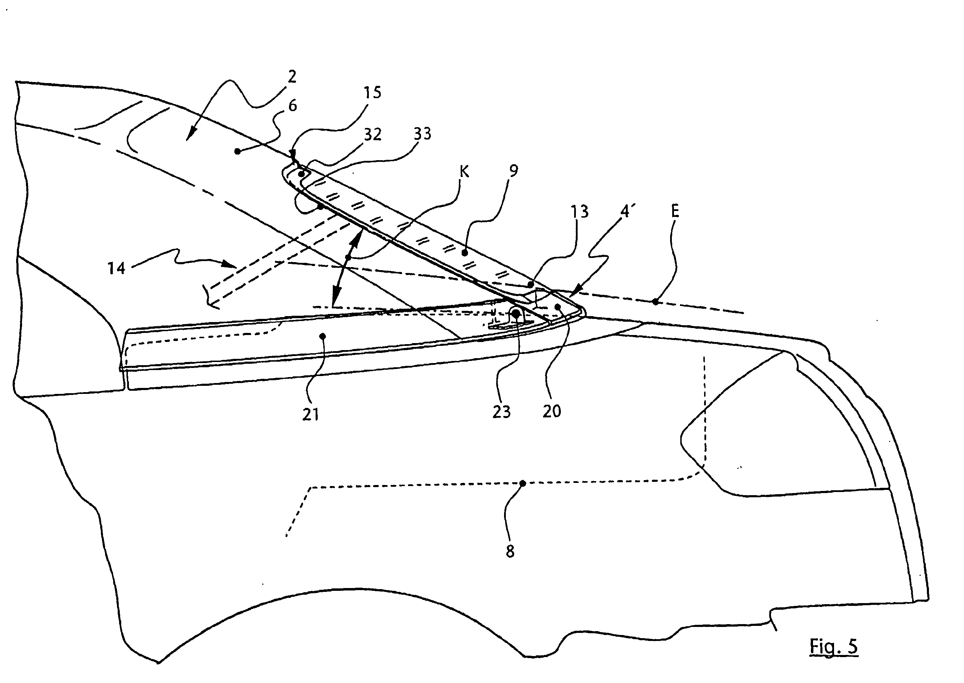

In Fig. 1 ist ein insgesamt mit 1 bezeichnetes Cabriolet-Fahrzeug dargestellt, das ein spiegelbildlich zur Fahrzeuglängsmittelebene 2 aufgebautes Verdeckgestell 3 (Fig. 2) mit einem heckseitigen Verdeckspannbügel 4 aufweist. Bei Verlagerung um ein karosseriefestes Hauptlager 5 ist das eine flexible Dachhaut 6 aufweisende Faltverdeck 7 mitsamt dem Verdeckgestell 3 in einem Verdeckkasten 8 (Fig. 5) ablegbar bzw. aus diesem in die Schließstellung rückführbar. Das Faltverdeck 7 ist im Heckbereich seiner flexiblen Dachhaut 6 mit einer oberhalb des Verdeckspannbügels 4 verlaufenden, insbesondere als Festglasscheibe ausgebildeten Heckscheibe 9 mit im wesentlichen rechteckiger Umfangskontur versehen.

Das erfindungsgemäß ausgebildete Cabriolet-Fahrzeug weist eine Heckscheibe 9 auf, die nur im Bereich des oberen Querseitenrandes 10 sowie ihrer beiden zur Fahrzeuglängsmittelebene 2 parallelen Längsseitenränder 11 und 12 eine die flexible Dachhaut erfassende Anbindung aufweist. Mit ihrem unteren Querseitenrand 13 ist die Heckscheibe 9 unmittelbar auf dem Verdeckspannbügel 4 abgestützt. Damit ist in sämtlichen der dargestellten Ausführungsformen gemäß Fig. 2 bis 6 die Durchsicht im Heckbereich des Fahrzeuges 1 dadurch verbessert, daß mit unmittelbarer Abstützung die Durchsicht behindernde Bauteile vermieden sind und ein Fahrzeugbenutzer in einer Durchsichtsebene E (Fig. 5) einen vergrößerten Übersichtsbereich hat.

Zur Handhabung dieser insgesamt vergrößerten Heckscheibe 9 weist die Heckscheibe einen jeweils an den Längsseitenrändern 11 bzw. 12 angreifende Steuerungsbaugruppe 14 (von denen nur eine dargestellt ist) auf, die mit der Antriebskinematik des Verdeckgestells 3, dem Hauptlager 5 bzw. dem Verdeckspannbügel 4 verbunden ist. Diese Steuerungsbaugruppe 14 kann unmittelbar im Verbindungs-Randbereich von Heckscheibe 9 und Dachhaut 6 so angelenkt sein, daß dieser Baugruppe bei der Verdeckbewegung eine Zwangssteuerung durch die Faltung der Dachhaut vermittelt wird (nicht dargestellt).

In den dargestellten Ausführungsformen der Heckscheiben-Anbindung gemäß Fig. 2 bis 6 weist die Heckscheibe 9 jeweils einen diese im wesentlichen U-förmig mit einem oberen Querseitenschenkel 32 und parallelen Längsseitenschenkeln 33 und 34 umfassenden Rahmen 15 auf, an dem die Steuerungsbaugruppe 14 angelenkt ist. Mit dieser Verbindungskonstruktion ist die Heckscheibe 9 durch die Verdeckkinematik gesteuert verlagerbar. Ebenso ist denkbar, daß zur Bewegung der Heckscheibe 9 ein nicht dargestelltes Antriebsorgan in die Baugruppe integriert wird.

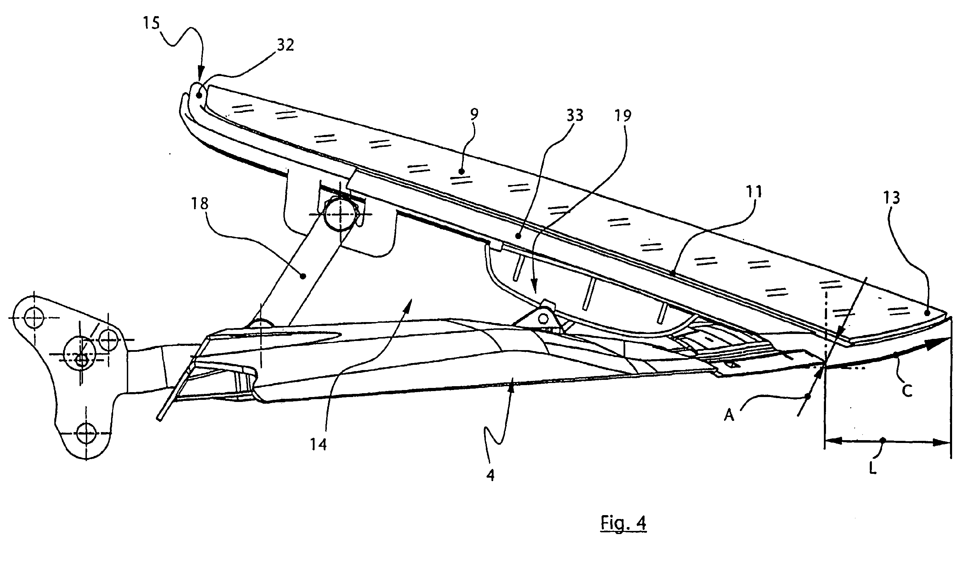

Der untere Querseitenrand 13 der Heckscheibe 9 ist über seine gesamte Breite auf dem Verdeckspannbügel 4 in einem lösbaren Verbindungseingriff festlegbar. Die Zusammenschau von Fig. 2 bis 4 verdeutlicht, daß der in Schließstellung (Fig. 2) des Faltverdecks 7 dichtend von oben auf dem Verdeckspannbügel 4 anliegende untere Querseitenrand 13 der Heckscheibe 9 relativ zum Verdeckspannbügel 4 verlagerbar ist und bei dessen Bewegung zumindest phasenweise zwischen Querseitenrand 13 und Verdeckspannbügel 4 ein Abstand A gebildet ist. Mit der gemäß Fig. 2 und 4 dargestellten Ausführung der Steuerungsbaugruppe 14 wird die Heckscheibe 9 ausgehend von ihrer auf dem Verdeckspannbügel 4 aufliegenden Schließstellung nach außen hin verlagert (Pfeil L, Fig. 4).

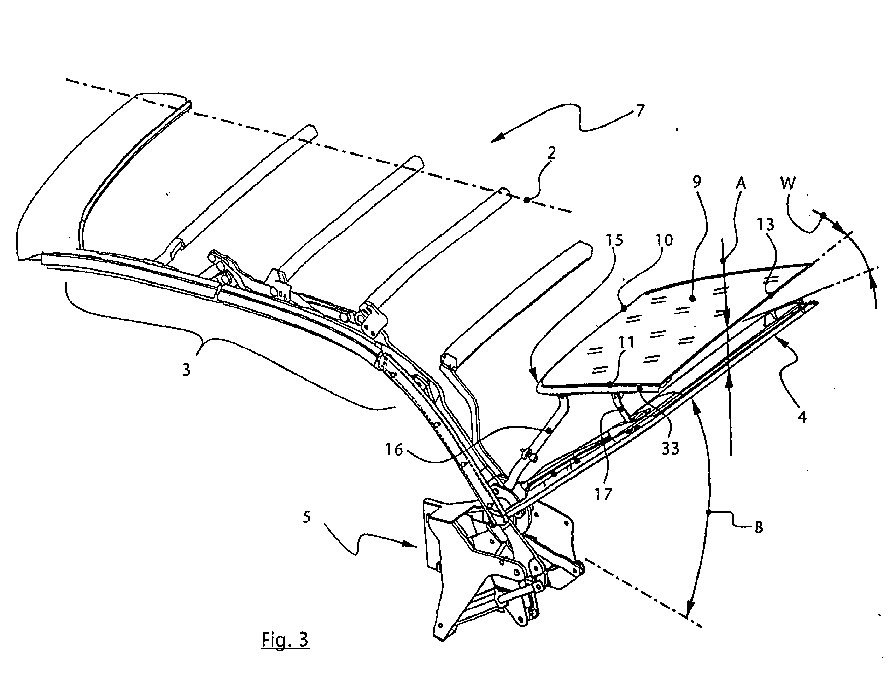

In Fig. 3 ist die Steuerungsbaugruppe 14 mit einer zwei Schwenkstreben 16 und 17 aufweisenden Parallelogrammlenkeranordnung versehen, so daß die Heckscheibe 9 bei einer ersten Öffnungsphase (Pfeil B) des Faltverdecks 7 gemeinsam mit dem Verdeckspannbügel 4 hochgeschwenkt wird und diese beiden Teile dabei den Abstand A mit einer Spreizstellung (Winkel W) bilden. Die Schwenkstreben 16 und 17 sind dabei einerseits am Längsseitenschenkel 33 (bzw. 34, nicht sichtbar) des Rahmens 15 angelenkt und andererseits ist eine Verbindung mit dem Verdeckgestell 3 bzw. mit dem Verdeckspannbügel 4 hergestellt.

In der Ausführungsform gemäß Fig. 2 und 4 weist die Steuerungsbaugruppe 14 im Nahbereich zum Verdeckgestell 3 einen zwischen dem Längsseitenschenkel 33 des Rahmens 15 und dem Verdeckspannbügel 4 vorgesehenen Schwenkschenkel 18 auf, der über eine Führungsbaugruppe 19 (an Stelle der Schwenkstrebe 17, Fig. 3) mit der Heckscheibe 9 und dem Verdeckspannbügel 4 zusammenwirkt. Mit diesem Antriebskonzept wird der Heckscheibe eine mit einem Pfeil C verdeutlichte Schwenk-Hub-Bewegung vermittelt. Der Schwenkschenkel 18 ist dabei über eine Führungsstrebe 18' mit dem Verdeckgestell 3 verbunden (Fig. 2).

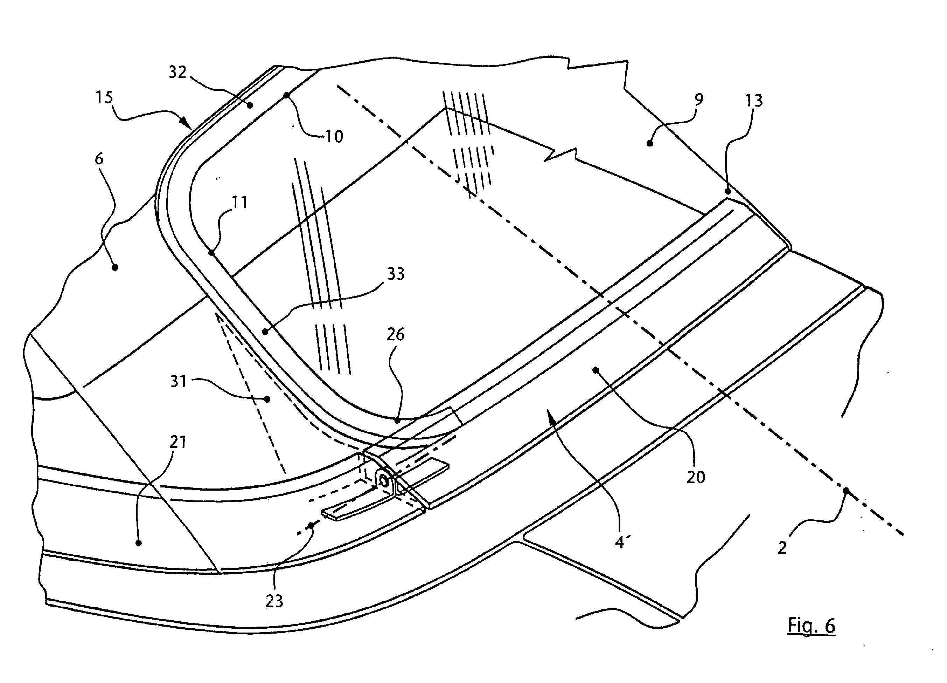

In Fig. 5 und Fig. 6 ist die Verbindungskonstruktion von Heckscheibe 9 und Rahmen 15 mit einem Verdeckspannbügel 4' versehen, der in seiner Längsrichtung dreiteilig ausgebildet ist und zwei parallel zu einem Mittelteil 20 verlaufende Seitenteile 21 bzw. 22 (nicht sichtbar) aufweist. In dieser Ausführung ist der untere Querseitenrand 13 der Heckscheibe 9 auf dem zwischen den Seitenteilen 21 und 22 verlaufenden Mittelteil 20 abgestützt.

Die beiden Seitenteile 21, 22 sind mit dem Mittelteil 20 durch eine jeweils im wesentlichen senkrecht zur Fahrzeuglängsmittelebene 2 verlaufende Stützachse 23 verbunden und die Heckscheibe 9 weist im Bereich ihres unteren Querseitenrandes 13 eine nicht näher dargestellte feste Anbindung zum Mittelteil 20 hin auf. In zweckmäßiger Ausführung ist diese feste Verbindung von Heckscheibe 9 und Verdeckspannbügel 4' dadurch erreicht, daß der U-förmige Rahmen 15 im Bereich seiner Seitenschenkel 33 (bzw. 34) endseitig im Bereich einer Bogenkontur 26 mit dem Mittelteil 20 verbunden wird und der Querseitenrand 13 von einer Dichtung (nicht dargestellt) untergriffen ist.

Diese Art der Anbindung der Heckscheibe 8 an den Verdeckspannbügel 4' gemäß Fig. 6 weist in der Ebene E ebenfalls eine verbesserte Durchsicht auf. Die Heckscheibe 9 ist gemeinsam mit dem Mittelteil 20 schwenkbar (Pfeil K, Fig. 5), so daß bei Ablage dieser Baugruppe im Verdeckkasten 8 die Heckscheibe 9 bis auf die Ebene des Verdeckspannbügels 4' heruntergeklappt werden kann und eine raumsparend enge Packstellung dieses Verdecks 7 erreicht ist.

In den gemäß Fig. 2 bis 6 dargestellten Ausführungsformen des Verdeckgestells 3 ist zur besseren Verdeutlichung der Einzelteile die Dachhaut 6 jeweils nur mit einer Strich-Punkt-Linie dargestellt. Für eine optimale Bewegung und Faltung dieser Dachhaut 6 hat es sich als zweckmäßig herausgestellt, daß im Anbindungsbereich der Heckscheibe 9 bzw. außenseitig im Bereich der jeweiligen Längsseitenschenkel 33 (bzw. 34) des Rahmens 15 eine in der Dachhaut 6 zum jeweiligen Verdeckspannbügel 4, 4' bzw. dessen Seitenteilen 21, 22 hin verlaufende und bei der Bewegung des Faltverdecks 7 als Spannungsausgleichszone wirksame Verdeckstofftasche 31 (Strichlinie in Fig. 6) vorgesehen ist.

## Patentansprüche

1. Cabriolet-Fahrzeug mit einem ein spiegelbildlich zur Fahrzeuglängsmittelebene (2) aufgebautes Verdeckgestell (3) mit heckseitigem Verdeckspannbügel (4; 4'; 4'') aufweisenden und bei Verlagerung um ein karosseriefestes Hauptlager (5) in einem heckseitigen Verdeckkasten (8) ablegbaren bzw. aus diesem rückführbaren Faltverdeck (7), dessen flexible Dachhaut (6) im Heckbereich eine oberhalb des Verdeckspannbügels (4; 4'; 4") verlaufende, insbesondere formstabile Heckscheibe (9) mit im wesentlichen rechteckiger Umfangskontur aufweist, **dadurch gekennzeichnet, daß** die Heckscheibe (9) nur im Bereich des oberen Querseitenrandes (10) sowie ihrer beiden Längsseitenränder (11, 12) eine die flexible Dachhaut (6) erfassende Anbindung aufweist, und ein unterer Querseitenrand (13) der Heckscheibe (9) in Schließstellung des Faltverdecks (7) unmittelbar von oben auf dem Verdeckspannbügel (4; 4') in einem lösbaren Verbindungseingriff abstützbar ist.

2. Cabriolet-Fahrzeug nach Anspruch 1, **dadurch gekennzeichnet, daß** die Heckscheibe (9) eine mit dem Verdeckgestell (3) und/oder dem Verdeckspannbügel (4; 4') verbundene Steuerungsbaugruppe (14) aufweist.

3. Cabriolet-Fahrzeug nach Anspruch 1 oder 2, **dadurch gekennzeichnet, daß** die Heckscheibe (9) von einem im wesentlichen U-förmigen Rahmen (15) umfaßt ist und an diesem die Steuerungsbraugruppe (14) angreift.

4. Cabriolet-Fahrzeug nach einem der Ansprüche 1 bis 3, **dadurch gekennzeichnet, daß** der in Schließstellung des Faltverdecks (7) dichtend am Verdeckspannbügel (4; 4') anliegende untere Querseitenrand (13) der Heckscheibe (9) relativ zum Verdeckspannbügel (4; 4') verlagerbar und bei dessen Bewegung zumindest phasenweise zwischen Querseitenrand (13) und Verdeckspannbügel (4; 4') ein Abstand (A; L) gebildet ist.

5. Cabriolet-Fahrzeug nach Anspruch 4, **dadurch gekennzeichnet, daß** die Heckscheibe (9) ausgehend von ihrer auf dem Verdeckspannbügel (4) aufliegenden Schließstellung nach außen verlagerbar (Pfeil C) ist.

6. Cabriolet-Fahrzeug nach Anspruch 4 oder 5, **dadurch gekennzeichnet, daß** die Heckscheibe (9) bei Bewegung des Verdeckgestells (3) zumindest phasenweise eine Spreizstellung (Winkel W) zum Verdeckspannbügel (4) einnimmt.

7. Cabriolet-Fahrzeug nach einem der Ansprüche 4 bis 6, **dadurch gekennzeichnet, daß** die Heckscheibe (9) als Anbindung den in die Dachhaut (6) integrierten U-förmigen Rahmen (15) aufweist, wobei dessen oberer Querseitenschenkel (32) und dessen Längsseitenschenkel (33, 34) mit der Dachhaut (6) dichtend verbunden sind.

8. Cabriolet-Fahrzeug nach einem der Ansprüche 4 bis 7, **dadurch gekennzeichnet, daß** an der jeweiligen Längssseitenschenkel (33, 34) des Rahmens (15) die mit dem Verdeckgestell (3) und/oder dem Verdeckspannbügel (4) zusammenwirkende Steuerungsbaugruppe (14) angelenkt ist.

9. Cabriolet-Fahrzeug nach einem der Ansprüche 1 bis 8, **dadurch gekennzeichnet, daß** der Verdeckspannbügel (4') in Längsrichtung dreiteilig ausgebildet ist und der untere Querseitenrand (13) der Heckscheibe (9) auf einem zwischen den spiegelbildlich verlaufenden Seitenteilen (21, 22) angeordneten Mittelteil (20) abgestützt ist.

10. Cabriolet-Fahrzeug nach Anspruch 9, **dadurch gekennzeichnet, daß** zwischen jeweiligem Seitenteil (21, 22) und dem Mittelteil (20) jeweils eine im wesentlichen senkrecht zur Fahrzeuglängsmittelebene (2) verlaufende und ein Schwenkgelenk bildende Stützachse (23) vorgesehen ist.

11. Cabriolet-Fahrzeug nach Anspruch 9 oder 10, **dadurch gekennzeichnet, daß** die Heckscheibe (9) fest mit dem Mittelteil (20) des Verdeckspannbügels (4') verbunden ist.

12. Cabriolet-Fahrzeug nach einem der Ansprüche 9 bis 11, **dadurch gekennzeichnet, daß** der mit der Heckscheibe (9) verbundene U-förmige Rahmen (15) im Bereich seiner Längseitenschenkel (33, 34) endseitig (bei 26) mit dem Mittelteil (20) des Verdeckspannbügels (4') verbunden ist.

13. Cabriolet-Fahrzeug nach einem der Ansprüche 9 bis 12, **dadurch gekennzeichnet, daß** die Heckscheibe (9) gemeinsam mit dem Mittelteil (20) durch die Steuerungsbaugruppe (14) um die Stützachse(n) (23) kippbar (Pfeil K) ist.

14. Cabriolet-Fahrzeug nach einem der Ansprüche 1 bis 13 **dadurch gekennzeichnet, daß** die Heckscheibe (9) außenseitig im Bereich ihres jeweiligen Längsseitenrandes (11, 12) eine in der Dachhaut (6) zum Verdeckspannbügel (4; 4') hin verlaufende und als Spannungsausgleichszone vorgesehene Verdeckstofftasche (31) aufweist.

## Claims

1. Convertible vehicle having a folding-top framework (3) which is constructed as a mirror image about the longitudinal centre-plane of the vehicle and which has a folding top (7) which has a rear folding-top tensioning bow (4, 4', 4") and which, when displaced about a main mounting (5) fixed to the bodywork, can be stowed in a folding-top compartment (8) at the rear of the vehicle or can be returned therefrom, the flexible roof-skin (6) of which folding top (7) has, in the region of the rear of the vehicle, a rear window (9) which extends above the folding-top tensioning bow (4, 4', 4"), which is in particular of a stable shape, and which is of substantially rectangular peripheral outline, **characterised in that** only in the region of its upper transverse side edge (10) and its two longitudinal side edges (11, 12) does the rear window (9) have a connection which grasps the flexible roof-skin (6), and a lower transverse side edge (13) of the rear window (9) can be supported directly from above on the folding-stop tensioning bow (4, 5') in a releasable uniting engagement when the folding top (7) is in the raised position.

2. Convertible vehicle according to claim 1, **characterised in that** the rear window (9) has a controlling sub-assembly (14) which is connected to the folding-top framework (3) and/or the folding-top tensioning bow (4, 4').

3. Convertible vehicle according to claim 1 or 2, **characterised in that** the rear window (9) is enclosed by a substantially U-shaped frame (15) and the controlling sub-assembly (14) engages with this latter.

4. Convertible vehicle according to one of claims 1 to 3, **characterised in that** the lower transverse side edge (13) of the rear window (9), which bears against the folding-top tensioning bow (4, 4') with a seal when the folding top is in the raised position, is displaceable relative to the folding-top tensioning bow (4, 4') and, in the course of this movement, a spacing (A, L) forms between the transverse side edge (13) and the folding-top tensioning bow (4, 4'), at least in a phase or phases.

5. Convertible vehicle according to claim 4, **characterised in that**, starting from its closed position in which it rests on the folding-top tensioning bow (4), the rear window (9) can be displaced outwards (arrow C).

6. Convertible vehicle according to claim 4 or 5, **characterised in that**, when the folding-top framework (3) moves, the rear window (9) assumes a splayed position (angle W) relative to the folding-top tensioning bow (4) at least in a phase or phases.

7. Convertible vehicle according to one of claims 4 to 6, **characterised in that** the rear window (9) has, as a connection, the U-shaped frame (15) incorporated in the roof-skin (6), the upper transverse side limb (32) of the said frame (15) and its longitudinal side limbs (33, 34) being connected to the roof-skin (6) with a seal.

8. Convertible vehicle according to one of claims 4 to 7, **characterised in that** the controlling sub-assembly (14), which co-operates with the folding-top framework (3) and/or the folding-top tensioning bow (4), is hinged to the particular longitudinal side limb (33, 34) concerned of the frame (15).

9. Convertible vehicle according to one of claims 1 to 8, **characterised in that** the folding-top tensioning bow (4') is formed in three parts in the longitudinal direction, and the lower transverse side edge (13) of the rear window (9) is supported on a central part (20) which is arranged between the lateral parts (21, 22), which latter extend as mirror images of one another.

10. Convertible vehicle according to claim 9, **characterised in that** between each lateral part (21, 22) and the central part (20) is provided a supporting shaft on an axis (23) which extends substantially perpendicularly to the longitudinal centre plane (2) of the vehicle and which forms a pivoting joint.

11. Convertible vehicle according to claim 9 or 10, **characterised in that** the rear window (9) is solidly connected to the central part (20) of the folding-top tensioning bow (4').

12. Convertible vehicle according to one of claims 9 to 11, **characterised in that** the U-shaped frame (15) which is connected to the rear window (9) is connected to the central part (20) of the folding-top tensioning bow (4') in the region of the ends (at 26) of its longitudinal side limbs (33, 34).

13. Convertible vehicle according to one of claims 9 to 12, **characterised in that** the rear window (9) can be tilted (arrow K), together with the centre part (20), about the supporting shaft(s) and axis(es) (23) by the controlling sub-assembly (14).

14. Convertible vehicle according to one of claims 1 to 13, **characterised in that** the rear window (9) has on the outside, in the region of each of its longitudinal side edge (11, 12), a pocket (31) of folding-top material which extends in the roof-skin (6) towards the folding-top tensioning bow (4, 4') and which is intended as a stress-compensating zone.

## Revendications

1. Véhicule cabriolet avec une capote repliable (7) présentant une structure de capote (3) réalisée symétriquement par rapport à un plan médian longitudinal (2) du véhicule, avec un arceau de tension de la capote du côté de la vitre arrière (4 ; 4' ; 4"), la capote pouvant être rangée dans un coffre de capote arrière (8) ou extraite de celui-ci par déplacement autour d'un palier principal (5) fixé sur la carrosserie, et la toile de toit flexible (6) présente une vitre (9) dans la partie arrière, en particulier de forme stable, située au-dessus de l'arceau de tension de la capote (4 ; 4' ; 4") avec un périmètre sensiblement rectangulaire,
**caractérisé en ce que**
la vitre arrière (9) comporte dans la région du bord transversal supérieur (10) ainsi que dans celle de ses deux bords longitudinaux (11, 12) une jonction serrant la toile de toit flexible (6), et un bord transversal inférieur (13) de la vitre arrière (9) peut, en position fermée de la capote repliable (7), s'appuyer directement par le haut sur l'arceau de tension de la capote (4 ; 4') pour former une liaison d'assemblage détachable.

2. Véhicule cabriolet selon la revendication 1,
**caractérisé en ce que**
la vitre arrière (9) présente un ensemble de commande (14) raccordé à la structure de capote (3) et/ou à l'arceau de tension de la capote (4; 4').

3. Véhicule cabriolet selon la revendication 1 ou 2,
**caractérisé en ce que**
la vitre arrière (9) est entourée par un cadre essentiellement en forme de U (15) et le module de commande (14) agit sur celui-ci.

4. Véhicule cabriolet selon l'une quelconque des revendications 1 à 3,
**caractérisé en ce que**
le bord transversal inférieur (13) de la vitre arrière (9), appliqué de façon étanche sur l'arceau de tension de la capote (4 ; 4') en position fermée de la capote repliable (7), est déplaçable par rapport à l'arceau de tension de la capote (4 ; 4') et, lors du mouvement de ce dernier, au moins par phases, se forme une distance (A ; L) entre le bord transversal inférieur (13) et l'arceau de tension de la capote (4 ; 4').

5. Véhicule cabriolet selon la revendication 4,
**caractérisé en ce que**
la vitre arrière (9) est déplaçable vers l'extérieur (flèche C) en partant de sa position fermée appliquée sur l'arceau de tension de la capote (4).

6. Véhicule cabriolet selon la revendication 4 ou 5,
**caractérisé en ce que**
la vitre arrière (9) occupe au moins par phases, lors du mouvement de la structure de capote (3), une position écartée (angle W) par rapport à l'arceau de tension de la capote (4).

7. Véhicule cabriolet selon l'une quelconque des revendications 4 à 6,
**caractérisé en ce que**
la vitre arrière (9) présente comme jonction le cadre en forme de U (15) intégré dans la toile de toit (6), dans lequel la branche transversale supérieure (32) et les branches longitudinales (33, 34) de ce dernier sont assemblées de façon étanche à la toile de toit (6).

8. Véhicule cabriolet selon l'une quelconque des revendications 4 à 7,
**caractérisé en ce que**
le module de commande (14) coopérant avec la structure de capote (3) et/ou l'arceau de tension de la capote (4) est articulé sur les branches longitudinales respectives (33, 34) du cadre (15).

9. Véhicule cabriolet selon l'une quelconque des revendications 1 à 8,
**caractérisé en ce que**
l'arceau de tension de la capote (4') est formé en trois parties dans la direction longitudinale et le bord transversal inférieur (13) de la vitre arrière (9) est appuyé sur une partie centrale (20) disposée entre les parties latérales placées de façon symétrique (21, 22).

10. Véhicule cabriolet selon la revendication 9,
**caractérisé en ce qu'**
on prévoit chaque fois, entre chaque partie latérale (21, 22) et la partie centrale (20), un axe de support (23) sensiblement perpendiculaire au plan médian longitudinal (2) du véhicule et formant une articulation pivotante.

11. Véhicule cabriolet selon la revendication 9 ou 10,
**caractérisé en ce que**
la vitre arrière (9) est attachée fixement à la partie centrale (20) de l'arceau de tension de la capote (4').

12. Véhicule cabriolet selon l'une quelconque des revendications 9 à 11,
**caractérisé en ce que**
le cadre en forme de U (15) assemblé à la vitre arrière (9) est assemblé dans la région de ses branches longitudinales (33, 34), du côté de l'extrémité (en 26), à la partie centrale (20) de l'arceau de tension de la capote (4').

13. Véhicule cabriolet selon l'une quelconque des revendications 9 à 12,
**caractérisé en ce que**
la vitre arrière (9) peut être inclinée autour de l'axe/des axes de support (23) par le module de commande (14) conjointement à la partie centrale (20) (flèche K).

14. Véhicule cabriolet selon l'une quelconque des revendications 1 à 13,
**caractérisé en ce que**
la vitre arrière (9) présente du côté extérieur, dans la région de chacun des bords longitudinaux (11, 12), une poche de matériau de capote (31) dirigée dans la toile de toit (6) vers l'arceau de tension de la capote (4 ; 4') et prévue comme zone d'équilibrage de contraintes.
